Europäisches Patentamt

European Patent Office

Office européen des brevets

(11) Veröffentlichungsnummer: **0 284 731 B1**

(12) **EUROPÄISCHE PATENTSCHRIFT**

(45) Veröffentlichungstag der Patentschrift: **15.04.92**

(21) Anmeldenummer: **88101571.3**

(22) Anmeldetag: **04.02.88**

(51) Int. Cl.⁵: **F16C 19/18**, F16C 33/60

(54) **Zweireihiges Wälzlager.**

(30) Priorität: **17.03.87 DE 3708600**

(43) Veröffentlichungstag der Anmeldung:
**05.10.88 Patentblatt 88/40**

(45) Bekanntmachung des Hinweises auf die
Patenterteilung:
**15.04.92 Patentblatt 92/16**

(84) Benannte Vertragsstaaten:
**CH DE ES FR GB IT LI SE**

(56) Entgegenhaltungen:
EP-A- 0 237 794    FR-A- 460 917
FR-A- 1 515 122    FR-A- 2 104 411
FR-A- 2 347 567    FR-A- 2 439 902
US-A- 3 586 396    US-A- 3 672 737

(73) Patentinhaber: **Jacob, Werner**
**Briandring 29**
**W-6000 Frankfurt/Main 70(DE)**

(72) Erfinder: **Jacob, Werner**
**Briandring 29**
**W-6000 Frankfurt/Main 70(DE)**

(74) Vertreter: **Harwardt, Günther, Dipl.-Ing.**
**HARWARDT NEUMANN PATENTANWÄLTE**
**Scheerengasse 2 Postfach 1455**
**W-5200 Siegburg 2(DE)**

# Beschreibung

Die Erfindung betrifft ein zweireihiges Wälzlager zur Aufnahme von Radial- und/oder Axialkräften, insbesondere Schrägschulterlager, mit einem Außenring und einem einteiligen nach Fertigung auf Endmaß durch mechanische Krafteinwirkung in zwei Innenringteile gesprengten Innenring, bei dem sich die Sprengfuge zwischen den beiden inneren Laufbahnen über den Umfang des Innenringes erstreckt, und die beiden Innenringteile durch eine an deren Innenfläche anliegende und jeweils gegen eine Radialfläche der Innenringteile abgestützte Spannhülse miteinander verbunden sind. Ein derartiges Wälzlager ist aus der US-A-3 672 737 bekannt.

Es ist bekannt, die Innenringe und Außenringe des Lagers zusammenhängend zu fertigen, d. h. die Laufbahnen des Innenringes sind zunächst Bestndteil eines Bauteiles, so daß diese in einer Aufspannung gemeinsam spanend bearbeitet werden können (US-A-3 672 737). Anschließend wird dieses Bauteil radial durch Aufbringung von Druck, d. h. durch Sprengen, ausgehend von einer Kerbe geteilt. Zur Bildung eines zweireihigen Lagers werden die beiden Ringteile, die die einander naheliegenden Laufbahnen aufweisen sollen, in einer Position montiert, bei der die bearbeiteten Radialflächen aneinander anliegen. Die beiden Ringe, die die weiter auseinanderliegenden Laufbahnen aufweise sollen, werden von einer Stützhülse aufgenommen, wobei diese zur Erzeugung des nötigen Zusammenhaltes und einer axialen Vorspannung Borde aufweist. Diese werden so verformt, daß sie gegen die bearbeiteten Radialflächen der Ringe anliegen. Vorteilhaft ist bei dieser Ausbildung zwar die gemeinsame Fertigung der die beiden zugehörigen Laufbahnen aufweisenden Außen- bzw. Innenringe.

Von wesentlichem Nachteil ist jedoch, daß aufgrund der gewählten Anordnung Radialverschiebungen der beiden Lagerreihen zueinander möglich sind. Dies führt zu ungleichen Tragverhältnissen und damit zu einer Verringerung der Lebensdauer. Die aus der gemeinsamen Fertigung gewonnenen Vorteile der geringen Toleranzen werden hierdurch wieder aufgehoben. Die relativ dünne Stützhülse kann ebenfalls nur einen geringen Beitrag zu einer guten Halterung leisten. Würde die Hülse entsprechend dimensioniert, so würde das Lager radial zu groß bauen, mit der Folge, daß die Vorteile hinsichtlich der Verbesserung der Tragzahl durch einen höheren Füllungsgrad mit Wälzkörpern gegenüber Lagern, die einteilige und jeweils beide Laufbahnen aufweisende Außenringe und Innenringe besitzen, wieder aufgehoben würde.

Aus der nachveröffentlichten EP-A-0 237 794 ist eine Lagerungsanordnung für die angetriebenen Räder eines Kraftfahrzeuges bekannt, die einen ungeteilten äußeren und einen geteilten inneren Lagerring für das zweireihige Kugellager aufweist. Die beiden durch Sprengen zwischen den beiden Wälzlagerreihen entstandenen Lagerinnenringteile werden durch Schrauben gegeneinander verspannt. Zum Anschluß der Lagerung an die zu lagernden Bauteile dienen Flanschansätze sowohl am äußeren als auch am inneren Lagerring.

Ausgehend hiervon liegt der vorliegenden Erfindung die Aufgabe zugrunde, ein zweireihiges Wälzlager zur Aufnahme von Radial- und/oder Axialkräften zu schaffen, daß eine kompakte Bauweise, d. h. eine hohe Tragfestigkeit bei geringem Außendurchmesser aufweist, einfach und kostengünstig herzustellen ist und dessen geteilter Lagerring so ausgebildet ist, daß Verschiebungen der beiden Ringteile zueinander im montierten Zustand ausgeschlossen sind.

Diese Aufgabe wird erfindungsgemäß dadurch gelöst, daß der Außenring einteilig ausgebildet ist und beide Laufbahnen aufweist, daß die Sprengfuge in einem vom rechten Winkel abweichenden Winkel die Lagerdrehachse schneidet, daß die beiden Innenringteile im montierten Zustand entsprechend ihrer gegenseitigen Zuordnung vor dem Sprengen wieder miteinander verbunden sind und daß die Spannhülse an einem Teil der Innenfläche der beiden Innenringteile anliegt und sich jeweils gegen die als Bestandteil einer im jeweiligen Innenringteil angebrachten Ringnut gebildeten Radialflächen abstützt.

Von Vorteil bei einer solchen Ausbildung ist, daß das Lager infolge der Teilung annähernd vollständig mit Wälzkörpern füllbar ist. Es wird also hierdurch eine sehr kompakte Bauteise in Bezug auf den Außendurchmesser erreicht, denn bei einem gegebenen Durchmesser wird die Tragzahl des Lagers im wesentlichen von der Anzahl der Wälzkörper bestimmt. Aufgrund der gewählten Trennung durch Sprengen ergibt sich in der Trennfuge eine unregelmäßige Ausbildung. Es ergeben sich also Erhebungen und Vertiefungen. Durch diese induviduelle Ausbildung ist die gegenseitige Zuordnung und Montage der beiden Innenringteile nur in einer Position möglich, nämlich in der Position, in der sie vor dem Aufbringen von Druck einander zugeordnet waren. Ferner wird aufgrund dieser Unregelmäßigkeiten und insbesondere durch den schrägen Verlauf der Sprengfuge eine innige Verbindung zwischen den beiden Innenringteilen nach Verspannung erreicht. Die unregelmäßigen Oberflächenstrukturen leisten einen Breitrag zur Aufnahme von Radialkräften bzw. von Kippmomenten, die bei außermittiger Aufbringung von Lasten auf das Lager einwirken können. Durch den schrägen Verlauf der Sprengfuge ergibt sich in Bezug auf das eine Lagerteil eine Art Außenkonusfläche und für das andere Lagerteil die dazu passende Innenkonusfläche, wobei jedoch die Oberfläche unregelmäßig ist.

Die erfindungsgemäße Lehre läßt sich nicht nur auf Lager anwenden, die Kugeln als Wälzkörper aufweisen.

Anders als bei der Lösung nach dem stand der Technik kann eine verhältnissmäßig dünnwandige Spannhülse gewählt werden, weil diese keinen Traganteil bezüglich der einwirkenden Radialkräft oder Kippmomente zu übernehmen braucht. Negative Einflüsse in Bezug auf die Lebensdauer des Lagers werden hierdurch vermieden.

In besonders einfacher Weise kann der Verlauf der Sprengfuge dadurch bestimmt werden, daß der Innenring auf seiner zylindrischen Außenfläche und in seiner Innenfläche mit ringförmig verlaufenden Kerben versehen ist, die entlang der Lagerdrehachse axial zueinander versetzt sind.

Zur Befestigung des Innenringes ist dieser bzw. sind die Innenringteile mit Bohrungen versehen. Bevorzugt ist vorgesehen, daß die beiden über die Spannhülse verbundenen Innenringteile des Innenringes mit zueinander fluchtenden Durchgangsbohrungen versehen sind und durch darin eingesetzte Schrauben miteinander verspannt und gleichzeitig mit einem Lagerbock oder dergleichen verbunden sind.

Die vormontierte Baueinheit wird beim Befestigen an den Lagerbock gleichzeitig verspannt. Die Spannhülse hält die Innenringteile vormontiert zusammen. Die Verspannung erfolgt erst beim Einbau.

Als Anwendungsgebiet für solche Lager kommt der allgemeine Maschinenbau, aber auch der Fahrzeugbau zur Lagerung der nicht angetriebenen Räder des Fahrzeuges in Frage. Ein wesentlicher Vorteil dieser Ausbildung eines Wälzlagers nach der Erfindung ist in der guten Wartungsfreundlichkeit zu sehen, insofern als ein Austausch einzelner Bauteile möglich ist.

Eine bevorzugtes Ausführungsbeispiel des erfindungsgemäßen zweireihigen Wälzlagers ist in der Zeichnung dargestellt.

Es zeigt

Figur 1  einen Halbschnitt durch ein Wälzlager in Form eines Schrägschulterkugellagers bei dem die axiale Verspannung beim Anbau der zu lagernden Bauteile erfolgt und

Figur 2  eine Einzelheit bezüglich der Halterung der beiden Innenringteile zueinander.

Das Wälzlager weist zwei Reihen 13, 14 von Wälzkörpern in Form von Kugeln 28 auf. Der Außenring 1 des Wälzlagers ist einteilig ausgebildet. Er weist zwei axial voneinander beabstandete Laufbahnen 8, 9 auf. Die Axialversetzung erstreckt sich entlang der Drehachse x-x des Lagers. Im vorliegenden Falle sind die Laufbahnen 8, 9 so angeordnet, daß die sich ergebende Schulter jeweils nach außen hin weist. Zwischen den beiden Laufbahnen 8, 9 ergibt sich eine erhöhte Ringschulter. Der Außenring 1 besitzt Befestigungsbohrungen 26, mit welchen er über Schrauben an ein zu lagerndes Bauteil anschließbar ist.

Der Innenring 3 ist zunächst einteilig hergestellt worden. Er besitzt ebenfalls zwei Laufbahnen 6, 7 . Die Laufbahnen sind einander zugewandt.

Zwischen den einander gegenüberliegenden Laufbahnen 6 und 8 am Innenring 3 und Außenring 1 sind Kugeln 28 abwälzend angeordnet. Die Kugeln 28 sind in einem Käfig 11 über den Umfang verteilt gehalten. Die Kugeln 28 bilden die erste Lagerreihe 13. Die Bahn, auf der sich die Mittelpunkte der Kugeln 28 bewegen, ist mit M 1 bezeichnet. Aufgrund der Anordnung der Laufbahnen 6, 8 zueinander ergibt sich eine durch die Mittelpunktsbahn M 1 verlaufende Wirkungslinie W 1. Die Wirkungslinie W 1 ist schräg verlaufend. d.h. sie schneidet die Drehachse x-x in einem Winkel, der von dem rechten Winkel abweicht. In ähnlicher Form, doch mit umgekehrter Neigung ist die zweite Wälzkörperreihe 14 in den Laufbahnen 7, 9 angeordnet. Die Kugeln 28 sind durch einen Käfig 30 distanziert gehalten. Die durch die Mittelpunktsbahn M 2 verlaufende Wirkungslinie W 2 ist mit gleichem Neigungswinkel der Wirkungslinie W 1 entgegengerichtet angeordnet. so daß sich eine Schnittstelle ergibt. Dieser Schnittpunkt S liegt außerhalb des Rollkreises, der Mittelpunktsbahnen M 1 und M 2 der Kugeln 28 der beiden Lagerreihen 13, 14. Der Abstand der beiden Schnittpunkte der Wirkungslinien W 1 und W 2 mit der Lagerdrehachse x-x ergibt die wirksame Abstützbasis für die Aufnahme von Kippmomenten. Diese Abstützbasis ist besonders günstig, wenn der Schnittpunkt S radial außerhalb der Mittelpunktsbahnen M 1 und M 2 liegt.

Zunächst wird der Innenring 3 in zusammenhängender Form hergestellt. Die beiden Laufbahnen 6 und 7 werden in einer Aufspannung spanend bearbeitet.

Nach der Fertigbearbeitung des Lagerinnenringes 3, d.h. insbesondere nach dem Härten, erfolgt eine Trennung des Innenringes 3 in zwei Innenringteile 4, 5. Diese Trennung wird durch Aufbringen von Druck in radialer Richtung erzeugt. Hierzu sind zwei Ringkerben 16, 17 auf der Außenfläche zwischen den beiden Laufbahnen 6, 7 und in der Innenfläche vorgesehen. Die beiden Kerben 16, 17 sind axial entlang der Lagerdrehachse x-x zueinander versetzt angeordnet. Wird nun radial Druck auf den fertig hergestellten Innenring 3 aufgebracht, so erfolgt eine Sprengung in zwei Innenringteile 4, 5. Die Sprengfuge 10 verläuft schräg, d.h. sie schneidet die Lagerdrehachse x-x in einem Winkel, der vom rechten Winkel abweicht. Die Oberfläche der Sprengfuge 10 ist unregelmäßig entsprechend den Gefügestrukturen des verwendeten Materiales. Eine gegenseitige Wiederzuordnung der beiden Innenringteile 4 und 5 ist nur in einer bestimmten Stellung, nämlich der, die sie einander gegenüber vor dem Sprengen eingenommen haben, wieder möglich. Aufgrund der Trennung des Innenringes 3 in zwei Innenringteile 4, 5 ist eine axiale Montage der Lagerreihen 13, 14 möglich, und zwar in einer Form, daß praktisch über den gesamten Umfang der Wälzkörperreihen 13, 14 eine annähernd hundertprozentige Füllung bzw. Aneinanderreihung von Wälzkörpern in Form von Kugeln 28 möglich ist.

Ferner sind noch Dichtungen 27 zur Abdichtung des Lagerinnenraumes vorgesehen.

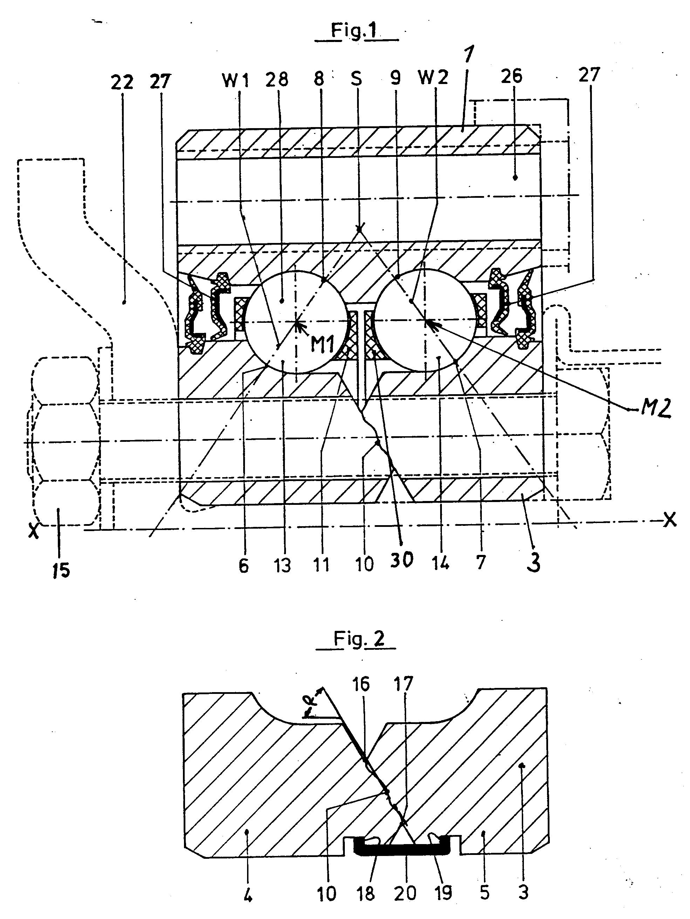

Wie aus Figur 2 ersichtlich wird das Wälzlager durch eine Spannhülse 20 zunächst nur vormontiert zusammengehalten, während die eigentliche Verspannung durch die Schrauben 15 durch Verbindung mit einem Lagerbock 22 erfolgt. Die Vormontage wird dadurch erreicht, daß in der Innenfläche 12 des Innenringes 3, d.h. der Bohrung im Bereich zwischen den beiden Laufbahnen 6, 7 eine Spannhülse 20 angeordnet ist. Dabei liegt die Spannhülse 20 mit ihrer Außenfläche an einer abgesetzten Ringfläche der Innenflächen an. Sie weist zwei zur Montage verformte Borde auf, von denen der eine Bord gegen die Radialfläche 18 einer Nut des Innenringteiles 4 anliegt und der andere Bord nach Verformung gegen die Radialfläche 19 einer Nut des Innenringteiles 5 anliegt.

**Patentansprüche**

1. Zweireihiges Wälzlager zur Aufnahme von Radial- und/oder Axialkräften, insbesondere Schrägschulterlager, mit einem Außenring (1) und einem einteiligen nach Fertigung auf Endmaß durch mechanische Krafteinwirkung in zwei Innenringteile (4, 5) gesprengten Innenring (3), bei dem sich die Sprengfuge zwischen den beiden inneren Laufbahnen (6, 7) über den Umfang des Innenringes (4, 5) erstreckt, und die beiden Innenringteile (4, 5) durch eine an deren Innenfläche (12) anliegende und jeweils gegen eine Radialfläche (18, 19) der Innenringteile (4, 5) abgestützte Spannhülse (20) miteinander verbunden sind, dadurch gekennzeichnet, daß der Außenring (1) einteilig ausgebildet ist und beide Laufbahnen (8, 9) aufweist, daß die Sprengfuge (10) in einem vom rechten Winkel abweichenden Winkel (α) die Lagerdrehachse (X-X) schneidet, daß die beiden Innenteile (4, 5) im montierten Zustand entsprechend ihrer gegenseitigen Zuordnung vor dem Sprengen wieder miteinander verbunden sind und daß die Spannhülse (20) an einem Teil der Innenfläche (12) der beiden Innenringteile (4, 5) anliegt und sich jeweils gegen die als Bestandteil einer im jeweiligen Innenringteil (4, 5) angebrachten Ringnut gebildeten Radialflächen (18, 19) abstützt.

2. Zweireihiges Wälzlager nach Anspruch 1, dadurch gekennzeichnet, daß der Innenring (3) auf seiner zylindrischen Außenfläche (11) und Innenfläche (12) mit ringförmig verlaufenden Kerben (16, 17) versehen ist, die entlang der Lagerdrehachse (x-x) axial zueinander versetzt sind.

3. Zweireihiges Wälzlager nach Anspruch 1, dadurch gekennzeichnet, daß die Innenringteile (4) mit Befestigungsbohrungen versehen sind.

4. Zweireihiges Wälzlager nach Anspruch 1, dadurch gekennzeichnet, daß die beiden Innenringteile (4, 5) des Innenringes (3) mit zueinander fluchtenden Durchgangsbohrungen (21) versehen sind und durch darin eingesetzte Schrauben (15) miteinander und gleichzeitig mit einem Lagerbock (22) oder dergleichen verbunden sind.

5. Zweireihiges Wälzlager nach Anspruch 1, dadurch gekennzeichnet, daß der Außenring (2) mit Befestigungsbohrungen (26) versehen ist.

**Claims**

1. A double-row rolling element bearing for receiving radial and/or axial forces, especially angular contact bearings, having an outer race (1) and a single-part inner race (3) which, after having been produced to its final dimensions, is broken into two inner race parts (4, 5) by applying mechanical forces and in the case of which the breaking line between the two inner tracks (6, 7) extends across thy circumference of the inner race (4, 5), the two inner race ports (4, 5) being connected to each other by a tensioning sleeve (20) resting against their inner face (12) and being supported on a radial face (18, 19) of the inner race parts (4, 5), characterised in that the outer race (1) is a single-part component comprising both tracks (8, 9), that the breaking line (10) intersects the rotational axis (X-X) of the bearing at an angle ( α ) deviating from a right angle, that in the assembled condition, the two inner parts (4, 5), when re-connected to each other, ore associated with each other as they were prior to having been broken apart, and that the tensioning sleeve (20) rests against part of the inner face (12) of the two inner race parts (4, 5) and is supported on radial faces (18, 19) forming part of an annular groove provided in the respective inner race part (4, 5).

2. A double-row roller bearing according to claim 1,
characterised in
that the inner race (3), on its cylindrical outer face (11) and inner face (12), is provided with annular notches (16, 17) axially offset relative to each other along the rotational axis (X-X) of the bearing.

3. A double-row roller bearing according to claim 1,
characterised in
that the inner race parts (4) are provided with fixing bores.

4. A double-row roller bearing according to Claim 1,
characterised in
that the two inner race parts (4, 5) of the inner race (3) are provided with through-bores (21) aligned relative to each other, and connected to each other and simultaneously to a bearing block (22) or the like by bolts (15) inserted therein.

5. A double-row roller bearing according to claim 1,
characterised in
that the outer race (2) is provided with fixing bores (26).

**Revendications**

1. Roulement à double rangée pour absorption de forces radiales et/ou axiales, notamment roulement à épaulement oblique, comportant une bague extérieure (1) et une bague intérieure (3) d'une seule pièce, éclatée après fabrication à mesure exacte par application de forces mécaniques en deux parties de bague intérieure (4, 5), dans laquelle la fente d'éclatement s'étend entre les deux chemins de roulement internes (6, 7) sur la circonférence de la bague intérieure (3) et les deux parties de bague intérieure (4, 5) sont réunies entre elles par une douille de serrage reposant contre leur surface interne (12) et appuyée contre une surface radiale (18, 19) de chacune des parties de bague intérieure (4, 5), caractérisé en ce que

la bague extérieure (1) est faite d'une seule pièce et présente deux chemins de roulement (8, 9),

la fente (10) coupe l'axe de rotation du roulement (x-x) suivant un angle (α) différent d'un angle droit,

les deux parties internes (4, 5) sont de nouveau réunies à l'état monté conformément à leur disposition réciproque avant l'éclatement, et

la douille de serrage (20) repose contre une partie de la surface interne (12) des deux parties de bague intérieure (4, 5) et s'appuie contre les surfaces radiales (18, 19) formées en tant que partie intégrante d'une gorge annulaire ménagée dans chacune des parties de bague intérieure (4, 5).

2. Roulement à double rangée selon la revendication 1, caractérisé en ce que la bague intérieure (3) est munie sur sa face extérieure (11) et sa face intérieure (12) cylindriques d'entailles (16, 17) à tracé annulaire décalées axialement les unes par rapport aux autres le long de l'axe de rotation du roulement (x-x).

3. Roulement à double rangée selon la revendication 1, caractérisé en ce que les parties de bague intérieure (4) sont munies de trous de fixation.

4. Roulement à double rangée selon la revendication 1, caractérisé en ce que les deux parties de bague intérieure (4, 5) de la bague intérieure (3) sont munies de trous de passage (21) alignés et sont réunies l'une à l'autre et simultanément à un support (22) ou autre pièce de ce type par des vis (15) qui y sont enfoncées.

5. Roulement à doubles rangée selon la revendication 1, caractérisé en ce que la bague extérieure (1) est munie de trous de fixation (26).

## Fig. 1

## Fig. 2